(19) Europäisches Patentamt
European Patent Office
Office européen des brevets

(11) Veröffentlichungsnummer: **0 339 103**
**B1**

# (12) EUROPÄISCHE PATENTSCHRIFT

(45) Veröffentlichungstag der Patentschrift: **09.01.91**

(51) Int. Cl.⁵: **F 16 K 31/10**

(21) Anmeldenummer: **88106642.7**

(22) Anmeldetag: **26.04.88**

(54) **Betätigungseinrichtung für ein pneumatisches Umschaltventil.**

(43) Veröffentlichungstag der Anmeldung:
**02.11.89 Patentblatt 89/44**

(45) Bekanntmachung des Hinweises auf die
Patenterteilung:
**09.01.91 Patentblatt 91/02**

(84) Benannte Vertragsstaaten:
**DE FR GB IT NL**

(56) Entgegenhaltungen:
**EP-A-0 130 024**
**BE-A- 519 265**
**FR-A-2 550 602**
**US-A-3 683 962**

(73) Patentinhaber: **HONEYWELL B.V.**
**Rijswijkstraat 175**
**NL-1062 EV Amsterdam (NL)**

(72) Erfinder: **Abcouwer, Jan Adriaan**
**Ronerbrink 120**
**NL-7812 LZ Emmen (NL)**

(74) Vertreter: **Rentzsch, Heinz et al**
**Honeywell Europe S.A. Holding KG Patent- und**
**Lizenzabteilung Kaiserleistrasse 55**
**D-6050 Offenbach am Main (DE)**

EP 0 339 103 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Betätigungseinrichtung gemäß Gattungsbegriff des Anspruchs 1, wie sie aus US-A-33 53 559 bekannt ist. Dort befindet sich der Doppelschließkörper am freien Ende einer einseitig eingespannten Schnappfeder, welche eine von elektrischen Schnappschaltern her bekannte Form hat. Der Betätigungsstift greift an dem den Schließkörper tragenden Hebel, also nicht an der Schnappfeder an. Zweck der genannten Betätigungseinrichtung ist es, ein möglichst schlagartiges Umschalten des Schließkörpers von dem einen auf einen gegenüberliegenden Ventilsitz auch dann zu erreichen, wenn die Bewegung des Betätigungsstifts sehr langsam erfolgt.

Der Erfindung hingegen liegt die Aufgabe zugrunde, ein schrittweises Umschalten derart zu erreichen, daß im Zuge der Schaltbewegung der Schließkörper zunächst von dem zuvorgeschlossenen Ventilsitz abhebt und nach Durchlaufen eines vorgegebenen weiteren Hubs der Schließkörper den gegenüberliegenden, zuvor geöffneten Ventilsitz schließt. Es erfolgt also keine Schnappbewegung. Gleichwohl soll ein etwaiger Überhub des Betätigungsstifts nicht zu einer dauerhaften Verformung des Übertragungshebels oder Beschädigung des Schließkörpers oder seiner Lagerung führen. Diese Aufgabe wird gelöst durch die im Anspruch 1 gekennzeichnete Erfindung. Der Übertragungshebel hat eine einfache durch Stanzen und Abkanten in einem Arbeitsgang herstellbare Form. Er ist leicht einzubauen und für etwaige Toleranzen hinsichtlich der Lagerung und des Betätigungshubes unempfindlich. Vorteilhafte Ausgestaltungen ergeben sich aus den Unteransprüchen. Die Betätigungseinrichtung eignet sich besonders für Einschalt-Magnetventile in Gasregelgeräten. Die Erregerspule samt Anker und Ventilstange können in ein Gehäuse eingesetzt und ggf. vergossen sein, wobei die Beweglichkeit der Ventilstange durch eine ihr Austrittsende aus dem Magnetantrieb abdeckende Membran unter gleichzeitiger Dichtung gewährleistet ist. Es ergibt sich eine elektromagnetische Betätigungseinrichtung, welche sehr leise arbeitet und folglich auch in Gasregelgeräten zum Einsatz kommen kann, die in bewohnten Räumen benutzt werden, beispielsweise in Gasheizgeräten und Warmwasserbereitern.

Die Erfindung wird nachfolgend anhand eines in der Zeichnung wiedergegebenen Ausführungsbeispiels erläutert. Dabei zeigt:

Fig. 1 den Übertragungshebel in Draufsicht;

Fig. 2 den Übertragungshebel perspektivisch von oben gesehen;

Fig. 3 die Betätigungseinrichtung mit aufgesetztem Magnetantrieb in der Ruhestellung, bei welcher das obere Ventil geschlossen und das untere Ventil geöffnet ist;

Fig. 4 den Betätigungshebel samt Lagerung und Schließkörper in einer Zwischenstellung, in welcher beide Ventile geöffnet sind; und

Fig. 5 die gleichen Teile in der Arbeitsstellung mit geschlossenem unteren Ventil und geöffnetem oberen Ventil.

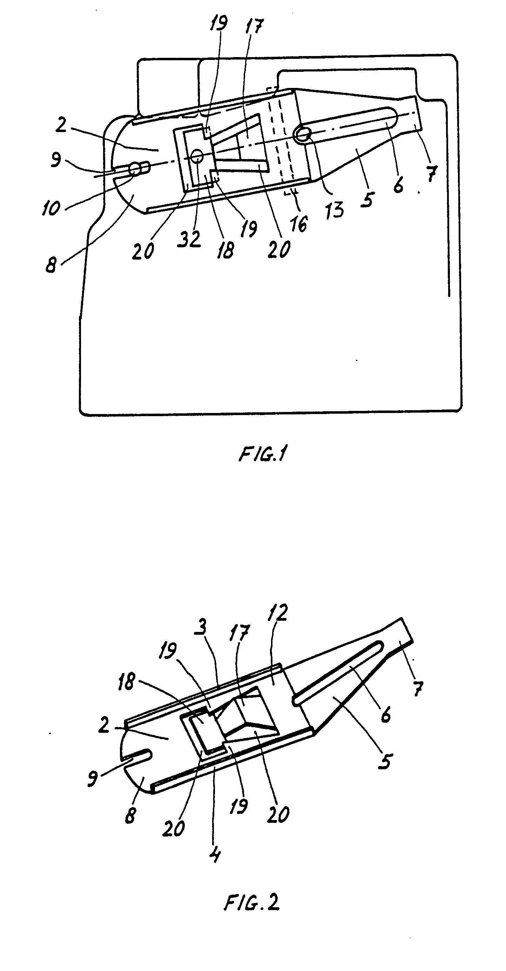

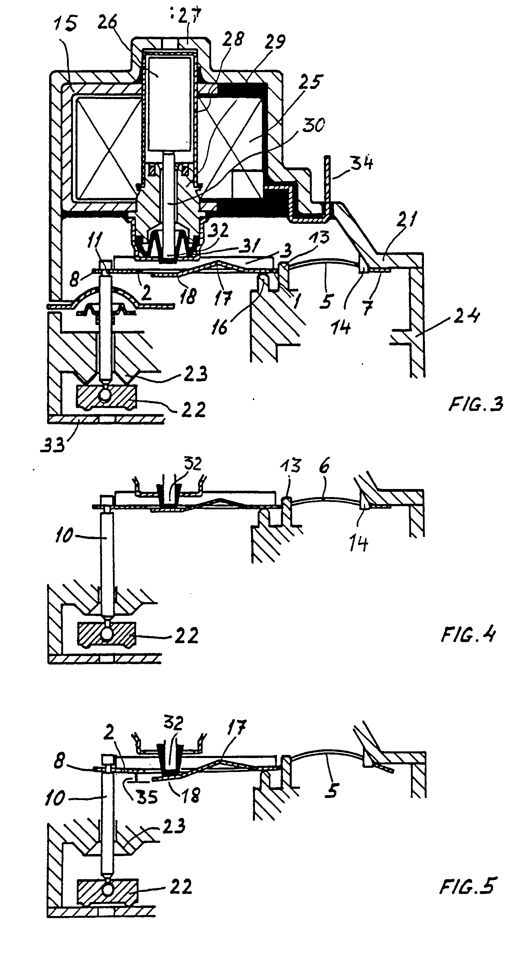

Anhand der Figuren 1 und 2 sollen zunächst Gestalt und Wirkungsweise des Übertragungshebels 1 erläutert werden. Er besteht aus einem Federblech, dessen linker Hebelarm 2 durch abgekantete Randteile 3 und 4 versteift ist, während sein rechter Hebelarm 5 keine derartigen Versteifungen aufweist und folglich elastisch ist. Die Elastizität wird noch erhöht durch einen Längsschlitz 6 sowie die Verringerung der Breite des Hebelarms 5 nach außen hin. Das Ende 7 des Hebelarms 5 dient, wie die Figuren 3 bis 5 zeigen, der einseitigen Abstützung, während am Ende 8 des ersten Hebelarms 2 ein Schlitz 9 vorgesehen ist, der in eine an der Ventilstange 10 vorgesehene Nut 11 eingreift und auf diese Weise eine gelenkige, kraftschlüssige Verbindung von Übertragungshebel 1 und Ventilstange 10 herstellt. Mit seinem mittleren Teil 12 liegt der Übertragungshebel 1 auf einem gehäusefesten Schneidenlager 16 auf. Zwei an den Enden des Schlitzes 6 in diesen hineinragende zapfenförmige Gehäuseansätze 13 und 14 sichern den Übertragungshebel 1 gegen Längs- und Querverschiebung. Die Lagerung und Lagesicherung des Übertragungshebels 1 kann auch auf andere Weise erfolgen.

Aus dem linken Hebelarm 2 ist eine Zunge 17 herausgestanzt, die vom Mittelteil 12 nach außen ragt und aus der Ebene des Übertragungshebels 1 nach oben heraus gewölbt ist (vgl. Fig. 2). Die Zunge 17 trägt an ihrem Ende ein verbreitetes Teil 18, mit dem sie die Begrenzungskanten 19 der die Zunge 17 umgebenden Ausnehmung 20 hinterstellt, und zwar auf der der Wölbung 17 abgewandten Seite des Hebelarms, d.h. von unten.

Bei der Betätigungseinrichtung gemäß Fig. 3 ist der Übertragungshebel 1, wie erwähnt, mit seinem mittleren Teil auf einem Schneidenlager 16 gelagert und liegt mit seinem rechten Ende 7 ohne Einspannung an einem gehäusefesten Anschlag 21 an. Das freie Ende 8 des linken Hebelarms 2 trägt die Ventilstange 10, an deren unterem Ende über ein Kugelgelenk der Schließkörper 22 gehalten ist. In der gezeigten Ruhelage verschließt er den oberen Ventilsitz 23.

Auf das Gehäuse 24 eines ansonsten nicht im einzelnen dargestellten Gasregelgerätes ist ein Magnetantrieb mit einer Spule 25, einem Joch 15 und einem Anker 26 aufgesetzt, wobei Spule 25 und Joch 15 in einen topfförmigen Deckel 27 eingegossen sind. In das Trägerrohr 28 der Erregerwicklung 25 ist eine Buchse 29 eingepreßt, durch welche der Betätigungsstift 30 hindurchragt. Er liegt mit seinem oberen Ende am Anker 26 an und wird an seinem unteren Ende durch eine Membran 31 gehalten. Das untere Ende 32 des Stiftes 30 steht dem Ansatz 18 der Zunge 17 gegenüber (vgl. auch Fig. 1).

In der Ruhelage gemäß Fig. 3 drückt die Vorspannung des rechten Hebelarms 5 aufgrund seiner Anlage am Gehäuseanschlag 21 den linken Hebelarm 2 nach oben und hebt damit über die Ventilstange 10 den Schließkörper 22 vom unteren Ventilsitz 33 ab, während der obere Ventilsitz

23 verschlossen ist. Wird nunmehr die Erregerspule 5 über die Anschlüsse 34 mit Strom versorgt, so bewegt sich der Anker 26 gegen die Kraft der Membran 31 nach unten, legt sich gegen den Ansatz 18 der Zunge 17 und schwenkt über diesen den Übertragungshebel 1 im Gegenuhrzeigersinn. Das linke Ende 8 bewegt sich folglich nach unten, und die Ventilstange 10 hebt den Schließkörper 22 vom oberen Ventilsitz 23 ab. Diese Zwischenlage ist in Fig. 4 wiedergegeben. Hier sind also beide Ventile 23 und 33 geöffnet.

Im Zuge der weiteren Bewegung des Ankers 26 und des Betätigungsstifts 30 nach unten legt sich der Schließkörper 22 gegen den unteren Ventilsitz 33, wie dies aus Fig. 5 ersichtlich ist. Sollte sich anschließend der Betätigungsstift 30 noch weiter nach unten bewegen, so führt dies nicht zu einer Verformung des linken Hebelarms 2, sondern das Ende 32 des Stifts 30 drückt den Teil 18 der Zunge 17 weiter nach unten, so daß dieser von der Unterseite der Begrenzungskante 19 abhebt, wie dies Fig. 5 zeigt. Der rechte Hebelarm 5 ist dann stark vorgespannt, wodurch im Wegfall der Betätigungskraft des Magnetantriebs 26, 30 der Übertragungshebel 1 im Uhrzeigersinn in seine Ausgangslage gemäß Fig. 3 zurückgeschwenkt werden kann. Ein etwaiger Überhub 35 des Betätigungsstifts 30 wird also durch die federnde Verformung der Zunge 17 aufgefangen.

Bei Wegfall der Betätigungskraft erfolgt die Rückbewegung der einzelnen Teile in der umgekehrten Reihenfolge, so daß sich eine Erläuterung der Rückstellung erübrigen dürfte. Der Übertragungshebel dient also nicht nur zur Übertragung der Betätigungsbewegung des Stifts 30 auf die Ventilstange 10, sondern zugleich auch als Überhubfeder. Er läßt sich durch Ausstanzen aus einem Federblech unter gleichzeitiger Erzeugung der Ausnehmung 20, der Zunge 17 und des Längsschlitzes 6 leicht herstellen, wobei durch ein geeignetes Formteil im gleichen Arbeitsgang die seitlichen Abkantungen 3 und 4 hergestellt und die Wölbung der Zunge 17 vorgenommen werden kann. Die Betätigungsvorrichtung zeigt einen äußerst einfachen, von Fertigungstoleranzen unabhängigen, kostengünstigen Aufbau.

**Patentansprüche**

1. Betätigungseinrichtung für ein pneumatisches Umschaltventil (22, 23, 33) mit einem unter Federspannung stehenden, an seinem einen Ende (8) einen Ventil-Doppelschließkörper (22) tragenden schwenkbar gelagerten Übertragungshebel (1), zwischen dessen Lagerstelle (16) und Schließkörperende (8) ein, die Umschaltung des Doppelschließkörpers zwischen zwei Ventilsitzen (23, 33) bewirkender Betätigungsstift (30) angreift, dadurch gekennzeichnet, daß

a) der Übertragungshebel (1) zweiarmig (2, 5) ausgebildet und mit seinem mittleren Teil (12) auf einem Kipplager (16) gelagert ist;

b) der dem Schließkörperende (8) abgewandte erste Hebelarm (5) als Federblech ausgebildet ist und mit seinem freien Ende (7) ohne Einspannung an einem seine Drehung in Betätigungsrichtung verhindernden Gehäuseanschlag (21) anliegt;

c) der den Doppelschließkörper (22) tragende zweite Hebelarm (2) steif ausgebildet ist;

d) aus dem zweiten Hebelarm (2) eine sich in Richtung des Hebelarms erstreckende Zunge (17) herausgetrennt ist, welche auf der Lagerseite (12) mit dem zweiten Hebelarm (2) verbunden, aus der Ebene des zweiten Hebelarms entgegen der Betätigungsrichtung herausgewölbt und federnd vorgespannt ist und mit ihrem freien Ende (18) Begrenzungskanten (19) der die Zunge (17) umgebenden Ausnehmung (20) auf der der Wölbung (17) abgewandten Seite hinterstellt;

e) der Betätigungsstift (30) der Wölbung entgegengerichtet an der Zunge (17) angreift.

2. Betätigungseinrichtung nach Anspruch 1, dadurch gekennzeichnet, daß die Versteifung des zweiten Hebelarms (2) durch seitlich abgebogene Kanten (3, 4) eines beide Hebelarme (2, 5) und die Zunge (17) bildenden Federblechs erzeugt ist.

3. Betätigungseinrichtung nach Anspruch 1 oder 2, dadurch gekennzeichnet, daß das den Doppelschließkörper (22) tragende Ende (8) des zweiten Hebelarms (2) einen zum Hebelarmende hin offenen Schlitz (9) aufweist und das gabelförmige Hebelarmende in eine Ringnut (11) der Ventilstange (10) eingreift.

4. Betätigungseinrichtung nach einem der Ansprüche 1 bis 3, dadurch gekennzeichnet, daß der Doppelschließkörper (22) von einer verschiebbar geführten Ventilstange (10) getragen und diese gelenkig am zweiten Hebelarm (2) befestigt ist.

5. Betätigungseinrichtung nach einem der Ansprüche 1 bis 4, dadurch gekennzeichnet, daß der erste Hebelarm (5) einen seine Elastizität erhöhenden Längsschlitz (6) aufweist.

6. Betätigungseinrichtung Anspruch 5, dadurch gekennzeichnet, daß zur Lagesicherung des Übertragungshebels (1) zwei gehäusefeste, an den Enden des Schlitzes (6) in diesen hineinragende Ansätze (13, 14) vorgesehen sind.

7. Betätigungseinrichtung nach einem der Ansprüche 1 bis 6, dadurch gekennzeichnet, daß am Betätigungsstift (30) auf der dem Übertragungshebel (1) abgewandten Seite der Anker (26) eines vom Ventilgehäuse (24) getragenen Elektromagneten (25, 26, 28) angreift.

**Revendications**

1. Ensemble de commande d'une vanne de commutation pneumatique (22, 23, 33) comportant un levier de transfert (1), logé à pivotement, soumis à une contrainte élastique, et portant, à l'une de ses extrémités (8), un corps de vanne à double fermeture (22), et une tige d'actionnement (30), qui provoque la commutation du corps à double fermeture entre deux sièges de valve (23, 33), pénétrant entre la position de logement (16) du levier (1) et son extrémité de corps de fermeture (8), ensemble caractérisé en ce que:

a) le levier de transfert (1) possède deux bras (2, 5) et dont la partie centrale repose sur un appui à bascule (16);

b) le premier bras de levier (5) opposé à l'extrémité de corps fermé (8) est en tôle à ressort et repose sans tension, par son extrémité libre (7), sur une butée de boîtier (21) qui empêche sa rotation dans le sens de l'actionnement;

c) le deuxième bras de levier qui porte le corps à double fermeture (22) est réalisé de façon rigide;

d) une languette (17) se sépare du deuxième bras de levier (2) et s'étend en direction du bras de levier, en étant reliée sur le côté logement (12) au deuxième bras de levier, recourbée hors du plan du deuxième bras de levier en opposition au sens d'actionnement et tendue de façon élastique, et vient, par son extrémité libre (18), derrière des arêtes de délimitation (19) de l'évidement (20) entourant la languette (17), vers le côté opposé à la courbure (17);

e) la tige d'actionnement (30) saisit la languette (17) dans le sens opposé à la courbure.

2. Ensemble de commande selon la revendication 1, caractérisé en ce que le raidissement du deuxième bras de levier (2) est effectué par des arêtes recourbées latéralement (3, 4) d'une tôle élastique constituant les deux bras de levier (2, 5) et la languette (17).

3. Ensemble de commande selon la revendication 1 ou 2, caractérisé en ce que l'extrémité (8) du deuxième bras de levier (2) portant le corps à double fermeture (22) présente une fente (9) ouverte vers l'extrémité de levier et en ce que l'extrémité de levier en forme de fourche pénètre dans une rainure annulaire de la tige de valve (10).

4. Ensemble de commande selon l'une des revendications 1 à 3, caractérisé en ce que le corps à double fermeture (22) est porté par une tige de valve (10) guidée à coulissement et que celle-ci est fixée par articulation au deuxième bras de levier (2).

5. Ensemble de commande selon l'une des revendications 1 à 4, caractérisé en ce que le premier bras de levier (5) présente une fente longitudinale (6) qui augmente son élasticité.

6. Ensemble de commande selon la revendication 5, caractérisé en ce qu'il est prévu, pour la sécurité de position du levier de transfert (1), deux appendices (13, 14) fixés sur le boîtier, faisant saillie dans la fente (6) aux extrémités de celle-ci.

7. Ensemble de commande selon l'une des revendications 1 à 6, caractérisé en ce que l'induit (26) d'un électroaimant (25, 26, 28) porté par le boîtier de valve (24) agit sur la tige d'actionnement (30) sur le côté opposé au levier de transfert (1).

## Claims

1. Operating device for a pneumatic changeover valve (22, 23, 33) comprising a tiltably borne and spring biased transmission lever (1) which at its one end (8) carries a valve dual closure member (22) and whereat an operating pin (30) providing the switch-over of the dual closure member between two valve seats (23, 33) engages the transmission lever (1) at a location positioned between its bearing part (16) and the end (8) carrying the closure member, characterized in that

a) the transmission lever (1) is a two armed (2, 5) lever which with its central portion (12) is supported on a pivot support (16);

b) the first lever arm (5) which is opposite the end (8) carrying the closure member is a spring blade and engages with its free end (7) a stationary abutment (21) without being rigidly fixed to said abutment, with said engagement preventing rotation of said lever arm (5) in operating direction;

c) the second lever arm (2) carrying the dual closure member (22) is stiff;

d) a tongue (17) extending in the direction of the second lever arm (2) is separated from said second lever arm, with said tongue being connected to the second lever arm (2) at the side adjacent to bearing (12) and said tongue (17) being bent against the operating direction out of the plane of the second lever arm and being spring biased, whereat its free end (18) extends behind edges (19) of a recess (20) surrounding said tongue (17) at that side of the lever arm which is opposite to the curvature (17) of the tongue;

e) the operating pin (30) engages the tongue (17) in a direction opposite to the curvature of the tongue (17).

2. Operating device according to claim 1, characterized in that the stiffening of the second lever arm (2) is accomplished by laterally bent-up edges (3, 4) of a spring blade which forms the two lever arms (2, 5) as well as the tongue (17).

3. Operating device according to claim 1 or 2, characterized in that the end (8) of the second lever arm (2) carrying the dual closure member (22) has a slot (9) which is open towards this end of this lever arm, and that the fork-like end (8) of the lever arm engages a circular groove (11) of the valve rod (10).

4. Operating device according to one of the claims 1 to 3, characterized in that the dual closure member (22) is carried by a valve rod (10) which is movably guided and is connected to the second lever arm (2) by a tiltable joint.

5. Operating device according to one of the claims 1 to 4, characterized in that the first lever arm (5) comprises a longitudinal slot (6) increasing its elasticity.

6. Operating device according to claim 5, characterized in that for securing the supporting position of the transmission lever (1) two stationary projections (13, 14) project into the end portions of the slot (6).

7. Operating device according to one of the claims 1 to 6, characterized in that the armature (26) of a solenoid (25, 26, 28) supported by a valve housing (24) engages the operating pin (30) at its end which is remote from the transmission lever (1).

FIG.1

FIG.2

FIG.3

FIG.4

FIG.5